# EUROPEAN PATENT SPECIFICATION

(11) **EP 1 527 512 B1**
(45) Date of publication and mention of the grant of the patent: **24.11.2010**
(21) Application number: 03723762.5
(22) Date of filing: 13.03.2003
(51) Int. Cl.: H02P 8/14, G05B 13/04

(54) **STEPPER DRIVER SYSTEM WITH CURRENT FEEDBACK**
SCHRITTMOTOR-ANTRIEBSSYSTEM MIT STROM-RÜCKKOPPLUNG
SYSTEME D'ENTRAINEMENT A PAS A RETROACTION DE COURANT

(30) Priority: 20.05.2002 US 153193
(43) Date of publication of application: 04.05.2005
(73) Proprietor: Trane International Inc., New York, NY 10019 (US)
(72) Inventor: KRAJEWSKI, Thomas, G., La Crosse, WI 54601 (US); VANDERZEE, Joel, C., La Crosse, WI 54601-6823 (US)
(74) Representative: Treeby, Philip David William
(86) International application number: PCT/US2003/008246
(87) International publication number: WO 2003/100960

(56) References cited:
- DE-A- 19 751 375
- US-A- 4 851 755
- US-A- 5 936 371
- OBERMEIER C.: "Modelling of a Permanent Magnet Disk Stepper Motor and Sensorless Field Oriented Speed Control sing an Extended Kalman Filter" IEEE, 1997, pages 714-720, XP002249874
- RUBAAI, AHMED: "Adaptation Learning Control Scheme for a High Performance Permanent Magnet Stepper Motor Using On-Line Random Training of Neural Networks" IEEE, 1999, pages 2386-2392, XP002249875

## Description

### BACKGROUND OF THE INVENTION

This disclosed embodiment relates to a system that drives and controls a stepper motor such as the type used in a commercial chiller system. More particularly, this disclosed embodiment relates to adapting and limiting characteristic parameters of the stepper motor such as speed, acceleration rate, torque, and applied force using current feedback in, for example, a commercial chiller system.

Over a normal range of operating speed, a stepper motor such as is used, for example, to move the guide vanes on a centrifugal compressor is capable of producing different maximum torque. At higher speed, the torque capability is less. The force requirement imposed on the stepper motor by the guide vanes is variable and depends on factors including the position of the vanes, operating conditions of the chiller, and aging (increase of force over time due to wear) of the stepper motor and drive components. It is desired to move the vanes as quickly as possible subject to the limitation of the force requirements.

Sufficient force is required to accelerate or decelerate the stepper motor and attached linkage and guide vanes. Other phenomena that can be detected by changes in force parameters include stall of the motor (when force capability is exceeded, such as at the end of travel) and compressor surge.

Previously, a separate controller matched to the particular application prescribed the speed of the stepper motor. Different chillers have different force requirements as a function of vane position, therefore, the most restrictive requirement has been used in order to ensure that all systems are adequately controlled. New applications could require new software or a new configuration. It would be necessary to determine force requirements of each new application analytically or experimentally.

U.S. Patent 3,355,906 to Newton shows pre-rotational vanes 22 whose positions are changed by a temperature responsive controller 24. U.S. Patent 4,084,120 to Lund recognizes that position feedbacks are used to monitor valve position, and that a zero voltage crossing switch or timing signal generating means 25 apparently delays its output signal to synchronize it with the inherent lag from the inductive loading of the coils. U.S. Patent 4,604,036 to Sutou et al. includes a torque control apparatus where a load torque is detected by a position detector and a temperature detector in the refrigeration cycle. U.S. Patent 4,686,834 to Haley et al. shows a vane positioning means 26 for opening or closing inlet guide vanes 20. U.S. Patent 4,694,390 to Lee includes a motor operated valve 22 including a bidirectional motor 24 driving a worm shaft 52. U.S. Patent 5,417,083 to Eber shows an electronic expansion valve driven by a stepper motor.

DE 19751375 discloses that electrical drives can be operated without a rotational speed sensor or position sensor when the position control circuit or rotational speed control circuit is closed, the load torques and load forces that act on the motor are to be reconstructed exclusively from information of the terminal variables, i.e. the terminal voltages and terminal currents, without an additional torque and force sensor and without an angle or position sensor or rotation speed sensor.

The paper, 'Modeling of a Permanent Magnet Dish Stepper Motor and

Sensorless Field Oriented Speed Control Using an Extended Kalman Filter' discloses applying the principle of field orientation and providing a closed-loop speed control the stepper motor becomes a high dynamic, robust, four-quadrant ac-servo drive considerably differing from its performance in the open-loop control mode. However, improving the stepper motor in this way, a rotor position encoder is necessary. This can be avoided if an extended Kalman filter is used which reconstructs the state variables by only measuring the phase voltages and currents. This filter requires a detailed mathematical model of the stepper motor. In order to consider the influence of the load torque an additional disturbance model is introduced into the filter. The Kalman filter is implemented in a completely digital field oriented state control. Experimental results confirm that this four-quadrant sensorless drive covers a wide range of speeds, reaching nearly standstill if a field generating current is impressed at low speeds.

An approach to indirectly detect and adaptively limit and control characteristic parameters of a stepper motor to maximize system efficiency and prevent stalling of the stepper motor is desired.

### BRIEF SUMMARY OF THE INVENTION

One aspect of the disclosed embodiment is a system capable of controlling a stepper motor that drives a load such as the guide vanes of a commercial chiller system. A stepper motor typically converts a series of power pulses to a corresponding series of equal angular movements. These pulses can be delivered to the stepper motor by a system at a variable rate. This allows the accurate positioning of the rotor of the stepper motor. When the stepper motor is connected to a load such as guide vanes through a linkage mechanism, torque can be produced to apply force to the load to do work. In the case of guide vanes the work done is, for example, moving the guide vanes to a new position.

According to the present invention as set forth in claim 1, there is provided a system for driving a stepper motor, apparatus for detecting and adaptively limiting and adjusting characteristic parameters and conditions of said stepper motor comprising: a driver sub-system, responsive to control signals, for transferring power to said stepper motor, the power to said stepper motor varying in frequency to maintain a predetermined maximum target current over a range of motor speeds; a power supply to provide a driver power to said driver sub-system that varies with the demands of said stepper motor, the driver power having a voltage and a current; a power detection device, responsive to said driver power, to generate a digital feedback signal representative of said current flowing from said power supply to said driver sub-system; and a digital processor, responsive to said digital feedback signal, to generate said control signals to maintain said predetermined maximum target current by adjusting the frequency of the power to said stepper motor.

Another aspect of the disclosed embodiment is a serial digital interface between the system and other devices of the commercial chiller system. The digital processor in the system is able to communicate and cooperate with these other devices through this interface to control the chiller.

According to a second aspect of the present invention there is provided a system for driving a stepper motor via a driver sub-system, powered by a power supply, a method as set forth in claim 4 for detecting and adaptively limiting and adjusting characteristic parameters and conditions of said stepper motor comprising: sensing a current flowing from the power supply to the driver sub-system; conveying electrical power from the driver sub-system to the stepper motor; establishing a predetermined maximum target current of the current flowing from the power supply to the driver sub-system; and in response to sensing the current flowing from the power supply to the driver sub-system, adjusting a frequency of the electrical power to the stepper motor to maintain the current flowing from the power supply to the driver sub-system at the predetermined maximum target current.

Another aspect of the disclosed embodiment is a method for communicating between the system and other devices of the commercial chiller system. The system is able to communicate and cooperate with these other devices to control the chiller.

Yet another aspect of the present invention is a method of controlling a stepper motor to position a load through a mechanical linkage comprising the steps of: measuring the electrical current driving the stepper motor; determining a measure of a force on the mechanical linkage as a function of the measured current; and controlling the speed of the motor as a function of the determined force.

Still another aspect of the present invention is a method of controlling a stepper motor to position a load through a mechanical linkage comprising the steps of: measuring the electrical current driving the stepper motor; determining an acceleration of the stepper motor as a function of the measured current; and controlling the speed of the motor as a function of the determined acceleration.

By using the foregoing techniques, indirect detection and adaptive limiting and controlling of characteristic parameters of a stepper motor to maximize system efficiency and prevent stalling of the stepper motor is achieved.

### BRIEF DESCRIPTION OF THE DRAWINGS

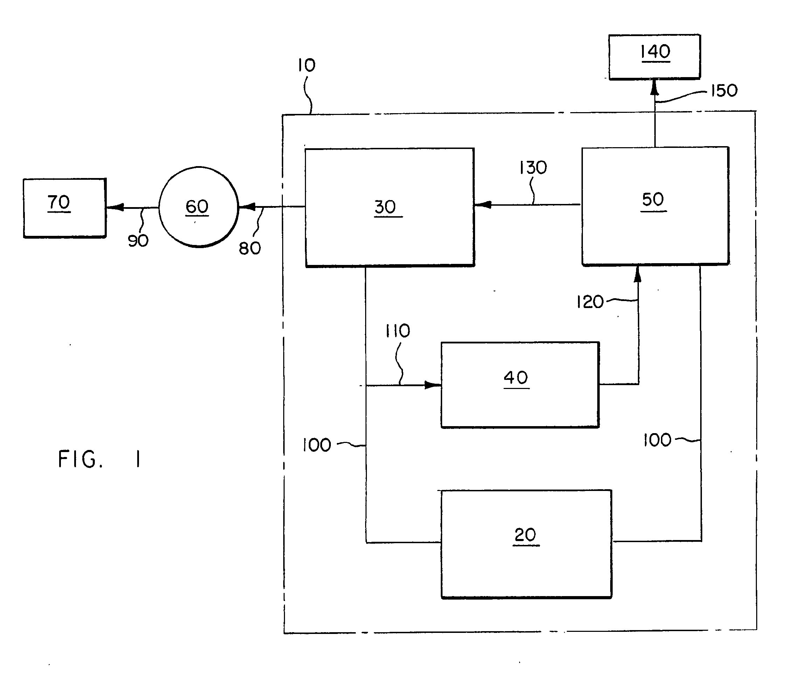

Figure 1 is a schematic block diagram of a system that drives and controls a stepper motor using a digital feedback signal.

### DETAILED DESCRIPTION OF THE INVENTION

The features of one embodiment enable an apparatus and method for adaptively driving and controlling a stepper motor in a commercial chiller system using current draw as a digital feedback signal. Indirect detection of characteristic parameters and conditions such as force parameters, acceleration rates, and stall conditions is thereby achieved. The system reacts to these characteristic parameters and conditions to adaptively limit and control the stepper motor. This is accomplished by monitoring a current of the system that varies with the demands of the stepper motor and generating control signals based on the monitored current and software algorithms.

Figure 1 is a schematic block diagram of a system 10 made in accordance with the disclosed embodiment. The system 10 comprises a power supply 20, a driver sub-system 30, a current detection device 40, and a digital processor 50. This system 10 electronically drives a stepper motor 60 that mechanically drives a load 70.

Referring to Figure 1, the driver sub-system 30 of the system 10 is electrically connected to the stepper motor 60 through a driving signal interface 80. The stepper motor 60 is mechanically connected to the load 70 through a linkage interface 90. The power supply 20 receives power from a voltage regulated power source 22 via bus 24. The power supply 20 is electrically connected to the driver sub-system 30 and the digital processor 50 through a power interface 100. The current detection device 40 is electrically connected to the power interface 100 at a feedback input 110. The digital processor 50 is electrically connected to the current detection device 40 through a feedback interface 120. The digital processor 50 is electrically connected to the driver sub-system 30 through a control signal interface 130. The digital processor 50 is electrically connected to other devices 140 through digital serial interface 150. In the preferred embodiment, devices 140 may comprise a CH.530™ controller sold by The Trane Company of La Crosse, Wisconsin for controlling a CenTraVac® centrifugal chiller.

During operation, the current detection device 40 measures the driver current supplied to the driver sub-system 30 by sampling the driver current through the feedback input 110. This measured driver current is provided to the digital processor 50 over the feedback interface 120 in the form of a digital feedback signal generated by the current detection device 40. In the disclosed embodiment, the current detection device 40 is a simple current sensing device comprising a resistor and a differential amplifier, and outputs an analog signal to the digital processor 50 (and to an analog-to-digital converter in the processor 50) that is representative of the measured driver current. The measured driver current is an indirect indicator of a force applied to the linkage interface 90 and is also an indirect indicator of the work required to accelerate a rotor inside the stepper motor 60 that is connected to the linkage interface 90. The speed of the motor is determined by the step rate driven by the controller. The current increases as necessary due to the load. The increasing speed may show more current in an amount depending on the inertia of the motor and the load. When the driver current is increasing, more work is being done due to the force and torque created by the motor 60.

The digital processor 50 reads the digital feedback signal and applies a software algorithm to generate control signals. These controls signals are sent to the driver sub-system 30 over the control signal interface 130. The driver sub-system 30 converts these control signals to driving signals that drive the stepper motor 60 over the driving signal interface 80. As the stepper motor 60 is driven, the driver current will tend to change based on the changing forces and accelerations associated with the stepper motor 60, the linkage interface 90, and the load 70. These changes in driver current are detected by the current detection device 40 and provided to the digital processor 50 over the feedback interface 120 as a new digital feedback signal. The digital processor 50 then generates new control signals based on this new digital feedback signal. Hence, the method of driving and controlling the stepper motor is adaptive. The software algorithm, applied by the digital processor 50, uses the digital feedback signal information to detect and adaptively control and limit various characteristic parameters of the stepper motor 60 and the associated linkage interface 90 and the load 70. The characteristic parameter that is directly controlled and adapted is the speed of the motor. This speed determines the torque. The speed of the motor 60 is controlled such that it changes gradually, up and down, depending on whether the driver current is above or below a pre-determined target driver current. The amount of driver current that is drawn from the power supply 20 by the driver sub-system 30 is predictable based on how the motor 60 is to be driven. Therefore, target driver currents can be pre-determined.

In the disclosed embodiment, the software algorithm is responsive to the digital feedback signal to accomplish several functions. First, the algorithm detects certain conditions of the stepper motor 60. Specifically, the algorithm indirectly detects force and changes in force (acceleration rate) applied by the stepper motor 60 to the linkage interface 90 and the load 70 based on the digital feedback signal.

Second, the algorithm generates control signals to control certain characteristic parameters of the stepper motor 60, the associated linkage interface 90 and the load 70. Specifically, the algorithm generates control signals that adapt the speed and torque of the stepper motor 60 as needed for the application, for example, to prevent a stall condition. It is generally desired to prevent a stall condition and allow the motor 60 to move as fast as possible. However, the speed of the motor 60 must be slow enough so driver current levels are high enough to provide the required torque. The digital feedback signal allows this balance between required torque and high speed to be achieved.

Third, the algorithm limits certain characteristic parameters. Specifically, the algorithm generates control signals that limit the acceleration rate of the stepper motor 60 and limit the driver current supplied to the stepper motor 60 to pre-defined limits. The driver current is limited since the power supply can only provide a certain maximum driver current. Also, the driver current may be limited to prevent excessive build up of heat in the system 10. Under some conditions, the algorithm also limits the amount of force that gets applied to the load 70 through the linkage interface 90.

Finally, the system is able to communicate with other devices 140 of the commercial chiller system through the external serial digital interface 150. Stepper motor position commands and status are communicated. For example, a detected stall condition of the stepper motor 60 can be reported. Preferably, the interface 150 and the bus 24 are a single connection but a person of skill in the art will recognize that they may be implemented as separate connections.

What has been described is a method of controlling a stepper motor where voltage is regulated and current is presumed to be directly proportional to power thereby allowing a force to be assumed as proportional to power. The force may either be the load on the stepper motor or the actuator, or the acceleration of the stepper motor or the actuator.

While the invention is described in connection with one embodiment, it will be understood that the invention is not limited to that one embodiment.

For example, some possible alternatives might include the following described below. The digital processor could be separate from the system and communicate over an external interface to accomplish the same functions.

As another alternative, other information that is different from that information described above may be communicated between the system and other devices of the commercial chiller system.

As a further alternative, a strain gauge or other sensor could be used to measure the force on the linkage interface of the stepper motor. Electronics to read the sensor could be included in the system or could be external and communicate through an external interface between the two. Force measurements could be communicated from the system or a separate device. Control processing could occur within the system or could be done by a separate device that takes the measurements, or by other separate devices such as a master digital processor in a control network.

As a further alternative, the software algorithm could actually be multiple algorithms used at various times by the digital processor.

And still, a further alternative is that the various system components could be combined in various ways. For example, the digital processor 50 could be part of the driver sub-system 30 as could be the current detection device 40, or the analog-to-digital converter in the processor 50 could be located outside of the processor 50. Additionally, the power supply 20 may be located outside of the system 10. Also, other conventional current detection devices can be substituted for the current detection device 40 described herein. Furthermore, the preferred embodiment uses a voltage regulated bus and can assume that power is proportional to current since voltage is constant. If the voltage was not regulated (i.e. constant or known), the voltage would be measured and power then calculated from the proposed currents and voltages.

Furthermore, the application of the stepper motor may be varied from the commercial chiller system described as the preferred embodiment to other applications in which stepper motors are used.

Further variations and modifications are possible within the scope of the appended claims.

## Claims

1. A stepper motor driving system (10) configured to detect and adaptively limit and adjust characteristic parameters and conditions of a stepper motor (60), comprising:
a driver sub-system (30), responsive to control signals, for transferring power to said stepper motor (60), the power to said stepper motor (60) varying in frequency to maintain a predetermined maximum target current over a range of motor speeds;
a power supply (20) to provide a driver power to said driver sub-system (30) that varies with the demands of said stepper motor (60), the driver power having a voltage and a current;
a power detection device (40), responsive to said driver power, to generate a digital feedback signal representative of said current flowing from said power supply (20) to said driver sub-system (30); and
a digital processor (50), responsive to said digital feedback signal, to generate said control signals to maintain said predetermined maximum target current by adjusting the frequency of the power to said stepper motor (60).

2. The apparatus of claim 1 wherein the power supply provides a regulated voltage, thus the voltage from the power supply is substantially constant.

3. The apparatus of claim 1 wherein said predetermined maximum target current is adjusted based on the frequency of the power to said stepper motor (60) to limit a force parameter applied to a load driven by said stepper motor.

4. Method for detecting and adaptively limiting and adjusting characteristic parameters and conditions of a stepper motor (60), comprising:
providing a driver sub-system (30), responsive to control signals, for transferring power to said stepper motor (60), the power to said stepper motor (60) varying in frequency to maintain a predetermined maximum target current over a range of motor speeds;
providing a power supply (20) to provide a driver power to said driver sub-system (30) that varies with the demands of said stepper motor (60), the driver power having a voltage and a current;
sensing a current flowing from the power supply (20) to the driver sub-system (30);
conveying electrical power from the driver sub-system (30) to the stepper motor (60);
establishing a predetermined maximum target current of the current flowing from the power supply (20) to the driver sub-system (30); and
in response to sensing the current flowing from the power supply (20) to the driver sub-system (30), adjusting a frequency of the electrical power to the stepper motor (60) to maintain the current flowing from the power supply (20) to the driver sub-system (30) at the predetermined maximum target current.

5. The method of claim 4 further comprising maintaining a voltage from said power supply (20) substantially constant even as said current and said frequency varies.

6. The method of claim 4 further comprising:
decreasing the frequency; and
lowering the predetermined maximum target current upon decreasing the frequency.

7. The method of claim 4 further comprising indirectly detecting a force parameter and changes of said force parameter applied by said stepper motor in response to said digital feedback signal and a software algorithm.

8. The method of claim 4 further comprising communicating between said system and devices external to said system.

## Patentansprüche

1. Schrittmotor-Antriebssystem (10), das ausgeführt ist, um charakteristische Parameter und Bedingungen eines Schrittmotors (60) zu detektieren und adaptiv zu begrenzen und einzustellen, umfassend:
ein Treibersubsystem (30), das auf Steuersignale anspricht, zum Übertragen von Leistung zu dem Schrittmotor (60), wobei die dem Schrittmotor (60) zugeführte Leistung in der Frequenz variiert, um einen vorgegebenen maximalen Sollstrom über einen Bereich von Motordrehzahlen aufrecht zu erhalten;
eine Leistungsversorgung (20), um dem Treibersubsystem (30) eine Treiberleistung bereitzustellen, die entsprechend dem Bedarf des Schrittmotors (60) variiert, wobei die Treiberleistung eine Spannung und einen Strom aufweist;
eine Leistungsdetektiervorrichtung (40), die auf die Treiberleistung anspricht, um ein digitales Rückkopplungssignal zu erzeugen, das für den Strom repräsentativ ist, der von der Leistungsversorgung (20) zu dem Treibersubsystem (30) fließt; und
einen digitalen Prozessor (50), der auf das digitale Rückkopplungssignal anspricht, um die Steuersignale zu erzeugen, um den vorgegebenen maximalen Sollstrom durch Einstellen der Frequenz der dem Schrittmotor (60) zugeführten Leistung aufrecht zu erhalten.

2. Vorrichtung nach Anspruch 1, wobei die Leistungsversorgung eine geregelte Spannung liefert, wodurch die Spannung von der Leistungsversorgung im Wesentlichen konstant ist.

3. Vorrichtung nach Anspruch 1, wobei der vorgegebene maximale Sollstrom auf der Grundlage der Frequenz der dem Schrittmotor (60) zugeführten Leistung eingestellt wird, um einen Kraftparameter zu begrenzen, der auf eine durch den Schrittmotor angetriebene Last angewandt wird.

4. Verfahren zum Detektieren und adaptiven Begrenzen und Einstellen charakteristischer Parameter und Bedingungen eines Schrittmotors (60), umfassend:
Bereitstellen eines Treibersubsystems (30), das auf Steuersignale anspricht, zum Übertragen von Leistung zu dem Schrittmotor (60), wobei die dem Schrittmotor (60) zugeführte Leistung in der Frequenz variiert, um einen vorgegebenen maximalen Sollstrom über einen Bereich von Motordrehzahlen aufrecht zu erhalten;
Bereitstellen einer Leistungsversorgung (20), um dem Treibersubsystem (30) eine Treiberleistung bereitzustellen, die entsprechend dem Bedarf des Schrittmotors (60) variiert, wobei die Treiberleistung eine Spannung und einen Strom aufweist;
Detektieren eines Stroms, der von der Leistungsversorgung (20) zu dem Treibersubsystem (30) fließt;
Übertragen von elektrischer Leistung von dem Treibersubsystem (30) zu dem Schrittmotor (60);
Festlegen eines vorgegebenen maximalen Sollstroms für den Strom, der von der Leistungsversorgung (20) zu dem Treibersubsystem (30) fließt; und,
als Reaktion auf das Detektieren des Stroms, der von der Leistungsversorgung (20) zu dem Treibersubsystem (30) fließt, Einstellen einer Frequenz der dem Schrittmotor (60) zugeführten elektrischen Leistung,
um den Strom, der von der beistungsversorgung (20) zu dem Treibersubsystem (30) fließt, auf dem vorgegebenen maximalen Sollstrom zu halten.

5. Verfahren nach Anspruch 4, ferner umfassend das im Wesentlichen Konstanthalten einer Spannung von der Leistungsversorgung (20), auch wenn Strom und Frequenz variieren.

6. Verfahren nach Anspruch 4, ferner umfassend:
Reduzieren der Frequenz; und
Senken des vorgegebenen maximalen Sollstroms nach Reduzieren der Frequenz.

7. Verfahren nach Anspruch 4, ferner umfassend das indirekte Detektieren eines Kraftparameters und Änderungen des Kraftparameters, die durch den Schrittmotor als Reaktion auf das digitale Rückkopplungssignal und einen Softwarealgorithmus angewandt werden.

8. Verfahren nach Anspruch 4, ferner umfassend das Kommunizieren zwischen dem System und Vorrichtungen außerhalb des Systems.

## Revendications

1. Système d'actionnement de moteur pas-à-pas (10) configuré de façon à détecter et à limiter et ajuster de façon adaptative des paramètres et conditions caractéristiques d'un moteur pas-à-pas (60), comprenant :
un sous-système de dispositif d'actionnement (30), réagissant à des signaux de commande de façon à transférer une alimentation audit moteur pas-à-pas (60), l'alimentation vers ledit moteur pas-à-pas (60) variant en fréquence de façon à maintenir un courant cible maximal prédéterminé sur une plage de vitesses de moteur ;
une alimentation (20) pour délivrer audit sous-système de dispositif d'actionnement (30) une alimentation de dispositif d'actionnement qui varie avec les demandes dudit moteur pas-à-pas (60), l'alimentation de dispositif d'actionnement ayant une tension et un courant ;
un dispositif de détection d'alimentation (40), réagissant à ladite alimentation de dispositif d'actionnement de façon à générer un signal de rétroaction numérique représentatif dudit courant circulant de ladite alimentation (20) audit sous-système de dispositif d'actionnement (30) ; et
un processeur numérique (50), réagissant audit signal de rétroaction numérique de façon à générer lesdits signaux de commande afin de maintenir ledit courant cible maximal prédéterminé par réglage de la fréquence de l'alimentation vers ledit moteur pas-à-pas (60).

2. Appareil selon la revendication 1, dans lequel l'alimentation délivre une tension régulée, de telle sorte que la tension venant de l'alimentation soit sensiblement constante.

3. Appareil selon la revendication 1, dans lequel ledit courant cible maximal prédéterminé est ajusté en fonction de la fréquence de l'alimentation vers ledit moteur pas-à-pas (60) de façon à limiter un paramètre de force appliqué à une charge entraînée par ledit moteur pas-à-pas.

4. Procédé pour détecter et limiter et ajuster de façon adaptative des paramètres et conditions caractéristiques d'un moteur pas-à-pas (60), comprenant :
la disposition d'un sous-système de dispositif d'actionnement (30), réagissant à des signaux de commande de façon à transférer une alimentation audit moteur pas-à-pas (60), l'alimentation vers ledit moteur pas-à-pas (60) variant en fréquence de façon à maintenir un courant cible maximal prédéterminé sur une plage de vitesses de moteur ;
disposer une alimentation (20) afin de délivrer audit sous-système de dispositif d'actionnement (30) une alimentation de dispositif d'actionnement qui varie avec les demandes dudit moteur pas-à-pas (60), l'alimentation de dispositif d'actionnement ayant une tension et un courant ;
détecter un courant circulant de l'alimentation (20) au sous-système de dispositif d'actionnement (30) ;
acheminer une alimentation électrique du sous-système de dispositif d'actionnement (30) au moteur pas-à-pas (60) ;
établir un courant cible maximal prédéterminé du courant circulant de l'alimentation (20) au sous-système de dispositif d'actionnement (30) ; et
en réponse à la détection du courant circulant de l'alimentation (20) au sous-système de dispositif d'actionnement (30), régler une fréquence de l'alimentation électrique vers le moteur pas-à-pas (60) de façon à maintenir le courant circulant de l'alimentation (20) au sous-système de dispositif d'actionnement (30) au courant cible maximal prédéterminé.

5. Procédé selon la revendication 4, comprenant de plus le maintien à partir de ladite alimentation (20) d'une tension sensiblement constante même lorsque ledit courant et ladite fréquence varient.

6. Procédé selon la revendication 4, comprenant de plus :
la diminution de la fréquence ; et
l'abaissement du courant cible maximal prédéterminé lors de la diminution de la fréquence.

7. Procédé selon la revendication 4, comprenant de plus la détection indirecte d'un paramètre de force et de changements dudit paramètre de force appliqué par ledit moteur pas-à-pas en réponse audit signal de rétroaction numérique et à un algorithme logiciel.

8. Procédé selon la revendication 4, comprenant de plus une communication entre ledit système et des dispositifs extérieurs audit système.
